Europäisches Patentamt

European Patent Office

Office européen des brevets

(11) Veröffentlichungsnummer: **0 368 114**
**A1**

# EUROPÄISCHE PATENTANMELDUNG

(21) Anmeldenummer: 89120089.1

(22) Anmeldetag: 30.10.89

(51) Int. Cl.⁵: **H01R 43/20, H01R 13/645,**
**G05B 19/12**

(30) Priorität: 09.11.88 DE 8814032 U

(43) Veröffentlichungstag der Anmeldung:
**16.05.90 Patentblatt 90/20**

(84) Benannte Vertragsstaaten:
**DE FR GB IT NL**

(71) Anmelder: **Grote & Hartmann GmbH & Co. KG**
**Am Kraftwerk 13**
**D-5600 Wuppertal 21(DE)**

(72) Erfinder: **Mantlik, Konrad**
**Am Eckbusch 35-5**
**D-5600 Wuppertal 1(DE)**

(74) Vertreter: **Patentanwälte Dr. Solf & Zapf**
**Schlossbleiche 20 Postfach 13 01 13**
**D-5600 Wuppertal 1(DE)**

(54) **Maschinell verarbeitbares Kunststoffgehäuse.**

(57) Die Erfindung betrifft ein Kunststoffgehäuse zur
Aufnahme von elektrischen Kontaktelementen, welches zur maschinellen Verarbeitung geeignet ist, wobei am Gehäuse Codierungselemente vorgesehen
sind, die aus mindestens zwei Nuten und mindestens zwei Stiften bestehen, wobei die Nuten und
Stifte raumformmäßig derart aufeinander abgestimmt
sind, daß die Stifte spielfrei in den Nuten gelagert
werden können, wobei die Stifte in die Nuten ein-
und ausschiebbar angeordnet sind.

EP 0 368 114 A1

## Maschinell vearbeitbares Kunststoffgehäuse

Die vorliegende Erfindung betrifft ein maschinell mit elektrischen Kontaktelementen bestückbares Kunststoffgehäuse gemäß dem Oberbegriff des Anspruchs 1.

Elektrische Kontaktelemente werden in der Regel in Kunststoffgehäusen untergebracht, welche dann in dem entsprechenden Gerät oder z.B in einem Kraftfahrzeug montiert werden. Um den Herstellungsaufwand zu verringern und um die Montagebedingungen zu vereinheitlichen, werden häufig Universalgehäuse verwendet, bei denen ein Gehäuse unterschiedliche Kontaktelemente aufnehmen kann.

Ein derartiges Gehäuse ist z.B. mit der CH-PS 468 069 bekannt geworden. Dieses Gehäuse ist zur Aufnahme unterschiedlicher Bauelemente bestimmt und weist eine Steckplatte auf, die je nach Bauelement unterschiedlich gestaltet ist. Dazu weist diese Steckplatte Anschlüsse auf, die bezüglich ihrer Anzahl und ihrer Lage dem jeweiligen Bauelement angepaßt sind. Diese bekannte Vorrichtung kann jedoch weder maschinell zusammengefügt werden, noch ist es möglich, sie nach dem Einsetzen des elektrischen Bauelementes maschinell weiterzuverarbeiten. Es ist deshalb nicht möglich, dieses bekannte Gehäuse unter vertretbarem Kostenaufwand in der modernen Großserienfertigung einzusetzen.

Der vorliegenden Erfindung liegt deshalb die Aufgabe zugrunde, ein Kunststoffgehäuse der eingangs genannten Art zu schaffen, welches sich für die maschinelle Verarbeitung eignet und bei dem kurz vor oder nach dem Bestücken maschinell ein bestimmtes Steckgesicht erzeugt werden kann.

Diese Aufgabe wird erfindungsgemäß durch den Gegenstand des Anspruchs 1 gelöst. Vorteilhafte Weiterbildungen der Erfindung sind Gegenstand der Unteransprüche.

Durch die Erfindung wird ein Kunststoffgehäuse geschaffen, das auf einfache Weise mit einem bestimmten Programm maschinell bestückt und maschinell erkannt werden kann. Das Kunststoffgehäuse wird einer Bestückungsmaschine zugeführt, in der die jeweils erforderlichen Kontaktelemente in das Gehäuse eingesetzt werden. Die zur Weiterverarbeitung vorgesehene Maschine, also z.B. eine Handhabungseinrichtung, die die Kunststoffgehäuse in das entsprechende Gerät einsetzt, erkennt durch die Codierungselemente, welche Kontaktelemente sich in dem Gehäuse befinden. Dadurch ist es möglich, die einzelnen Gehäuse zuverlässig zu erkennen und Fehler bei der Montage zu vermeiden.

Gemäß einer zu bevorzugenden Ausführungsform der Erfindung sind die Codierungselemente so angeordnet, daß sich ein binär erfaßbarer Code ergibt. Dies kann z.B. dadurch erreicht werden, indem bestimmte Elemente der Codierung vorhanden oder nicht vorhanden sind. Durch den Wechsel von "Vorhanden" und "Nicht Vorhanden" entsteht ein Binärcode, der von der Verarbeitungsmaschine abgelesen werden kann. Sind beispielsweise acht Codierungselemente vorhanden, so lassen sich damit insgesamt 256 Codierungen einstellen. Ist die Variation geringer, können auch weniger Codierungselemente eingesetzt werden; so ergibt sich z.B. bei fünf Codierungselementen eine Anzahl von 32 Variationen, während es bei sechs Codierungselementen dann schon 64 Variationen sind.

Gemäß einer weiteren zu bevorzugenden Ausführungsform der Erfindung werden zur Codierung Stifte verwendet, welche in entsprechende Ausnehmungen im Gehäuse einzuschieben oder - falls bereits eingeschoben - zu entfernen sind. Die Stifte werden dann z.B. von der Bestückungsmaschine, gemäß einem vorbestimmten Code, der über die Variation der Kontaktelemente informiert, in die entsprechenden Ausnehmungen eingeschoben oder herausgezogen.

Bei der Weiterverarbeitung prüft dann die Verarbeitungsmaschine, welche Stifte gesetzt sind und kann daraus den entsprechenden Code zurückgewinnen.

Gemäß einer weiteren zu bevorzugenden Ausführungsform ist das Kunststoffgehäuse mit Einrichtungen versehen, die es ermöglichen, eine Vielzahl solcher Gehäuse zu einem Gehäusegurt zusammenzufügen. Dadurch wird ein genauer Abstand zwischen den einzelnen Gehäusen erreicht.

Gemäß einer weiteren zu bevorzugenden Ausführungsform der Erfindung wird die Verbindung durch Rastelemente bewirkt, die an zwei gegenüberliegenden Seiten des Gehäuses angeordnet sind, und die derart komplementär gestaltet sind, daß die ersten Rastelemente eines Gehäuses mit den zweiten Rastelementen eines anderen Gehäuses zusammenwirken. Durch diese Verbindung wird die Eignung des Kunststoffgehäuses zu maschineller Verarbeitung weiter verbessert, da nun eine Vielzahl von Gehäusen im aufgerollten Zustand in die Bestükkungs- und Verarbeitungsmaschine eingesetzt werden kann.

Eine besondere Ausbildung der Rastelemente, welche zu einem zuverlässigen Verrasten mit hoher Haltekraft und leichter Vereinzelung führt, ist in den Unteransprüchen beschrieben.

Weitere Merkmale der vorliegenden Erfindung ergeben sich aus der nachfolgenden Beschreibung von Ausführungsbeispielen im Zusammenhang mit der Zeichnung.

Darin zeigen:

Fig. 1: eine Aufsicht auf ein Kunststoffgehäuse gemäß der Erfindung;

Fig. 2 eine Frontansicht des Gehäuses gemäß Fig.1;

Fig. 3 eine Detailansicht eines ersten Rastelementes zur Verbindung einzelner Gehäuse zu einem Gurt;

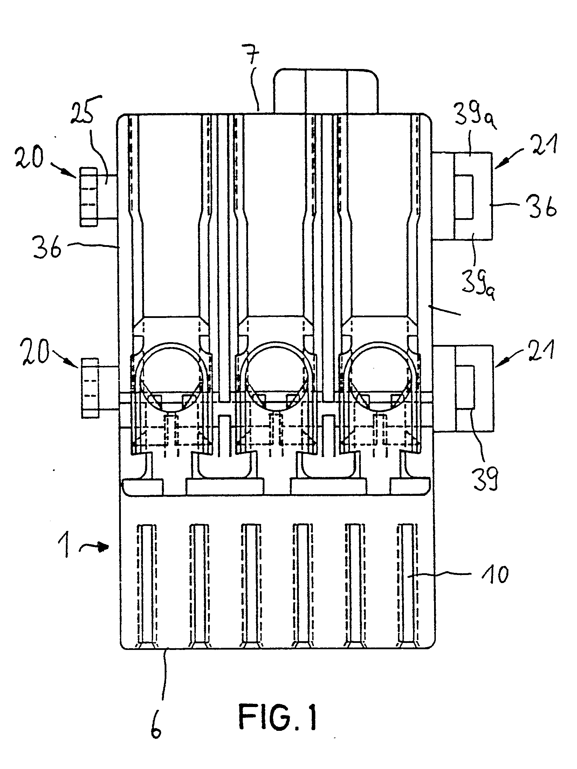

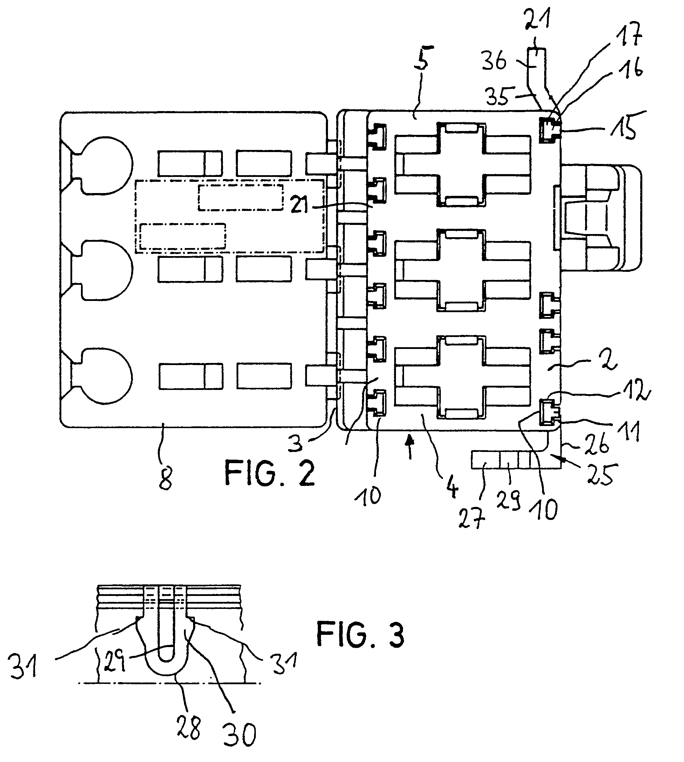

Ein erstes Ausführungsbeispiel der Erfindung wird in bezug auf die Fig. 1 bis 3 beschrieben. Das im wesentlichen quaderförmige Kunststoffgehäuse 1 weist eine Bodenwandung 2 , eine Deckenwandung 3, eine linke Seitenwandung 4, eine rechte Seitenwandung 5, eine Frontwandung 6 und eine Rückwandung 7 auf. Ein Deckel 8 ist klappbar an der Deckenwandung 3 angeordnet und ergänzt im geklappten Zustand die Deckenwandung 3.

In die Deckenwandung 3 und in die Bodenwandung 2 sind, von der Frontwandung 6 ausgehend, im Querschnitt T-förmige Nuten 10 eingeformt, deren Längsachse parallel zu den Seitenwandungen 4,5 verläuft und die sich bis zur Frontwandung 6 erstrecken. Die Nuten 10 weisen jeweils einen genau definierten Abstand zueinander und zu den Gehäusewandungen auf.

Im Ausführungsbeispiel gemäß den Figuren 1 bis 3 sind sechs Nuten im jeweils gleichen Abstand zueinander in die Deckenwandung 3 und vier Nuten mit ungleichem Abstand zueinander in die Bodenwandung 2 eingelassen.

Jede Nut 10 besteht aus einem im Querschnitt rechteckigen, zur Deckenwandung bzw. zur Bodenwandung offenen, schmalen T-Steg 11, und aus einem ebenfalls rechteckigen, jedoch breiteren T-Balkensteg 12 besteht. Der schmale Bereich 11 entspricht in seiner Lage dem senkrechten, der breite Bereich 12 dem waagrechten Teil des die Querschnittsform charakterisierenden Buchstabens "T".

In die Nuten 10 sind ebenfalls T-förmige Stifte 15 spielfrei eingeschoben, die aus einem rechteckigen Steg 16 und aus einem rechteckigen Querstück 17 bestehen. Der Steg 16 entspricht in seine Abmessungen im wesentlichen dem schmalen Nutbereich 11, das Querstück 17 dem breiten Nutbereich 12.

Die Stifte 15 werden für das Bestücken des Gehäuses in die Nuten 11 eingeschoben, wodurch sich die gewünschte Codierung des Geäuses ergibt. Es ist jedoch auch möglich, zunächst alle Nuten mit Stiften zu versehen und dann die Stifte aus den entsprechenden Nuten zu entfernen.

Die Stifte zum Einschieben in die Nuten können aus unterschiedlichen Materialien bestehen. So ist es möglich, Kunststoffstifte zu verwenden, und das Vorhandensein dieser Stifte dann in entsprechender Weise abzutasten. Es ist jedoch auch möglich, metallische Stifte zu verwenden, deren Vorhandensein dann z.B. mittels induktiver Geber erfaßt werden kann.

In beiden Fällen hat der schmale Nutbereich 11 dabei den Vorteil, daß das Vorhandensein des Stiftes von dieser Seite aus überprüft werden kann, was sowohl maschinell als auch visuell möglich ist.

Die Identifikation für die der jeweilgen Bestückung durch die Nuten 11 und die Stifte 15 kann auch dazu verwendet werden, ein unverwechselbares Zusammenfügen mit einem Stecker zu ermöglichen. Der zu verwendende Stecker weist dazu stiftartige Vorsprünge auf, die in die jeweils leeren Nuten eingreifen. Wenn die Anordnung der Vorsprünge beim Stecker und die leeren Nuten nicht zusammenpassen, kann der Stecker nicht eingeschoben werden, wodurch eine Fehlmontage zuverlässig vermieden wird.

Der Identifikationscode kann z.B. so aufgebaut werden, daß das Nichtvorhandensein eines Stiftes in einer Nut 10 in einem dualen Zahlensystem mit Null interpretiert wird. Das Vorhandensein eines Stiftes in der Nut kann dann mit Eins interpretiert werden.

Auf diese Art und Weise können dann beim gezeigten Ausführungsbeispiel, bei dem zehn Einsteckmöglichkeiten vorgesehen sind, insgesamt 1024 verschiedene Codierungen angezeigt werden.

Es soll jedoch darauf hingewiesen werden, daß es auch möglich ist, die Codierung ohne Einbeziehung eines binären Zahlensystems zu verwenden. In diesem Fall gäbe es bei dem gezeigten Ausführungsbeispiel dann zehn Möglichkeiten der Kontaktelementbestückung, wobei das Einschieben eines einzelnen Stiftes in eine bestimmte Position zeigt, welche Kontaktelemente in dem Gehäuse vorhanden sind.

Das Ausführungsbeispiel ist mit Rastelementen versehen, die es ermöglichen, die einzelnen Gehäuse mit genau definiertem Abstand zueinander zu einem Gehäusegurt zusammenzustecken.

Die Rastelemente bestehen aus zwei Rastfingern 20, die von der linken Seitenwandung 4 aus vorspringen und zwei Rastösen 21, die von der rechten Seitenwandung 5 aus vorspringen.

Die Rastfinger 20 sind durch einen Steg 25 gebildet, der von der linken Seitenwandung 4 aus vorspringt und dessen untere Fläche 26 exakt mit der äußeren Fläche der Bodenwandung 2 fluchtet. Von diesem Steg aus erstreckt sich ein Rasthaken 27 aus im rechten Winkel nach oben, d.h. parallel und im Abstand zur Seitenwandung 4. Der Rasthaken 27 ist an seinem oberen Ende 28 halbkreisbogenförmig gerundet und weist eine in seiner Längsrichtung verlaufende Ausnehmung 29 auf. Zu beiden Seiten des Rasthakens 27 ist eine Rastnase 30 angeordnet, die jeweils aus einer symmetrisch zu der Längsrichtung des Rasthakens verlaufenden Verbreiterung besteht, deren nach unten gerichtete Kante 31 senkrecht zu der Längsachse verläuft.

Die Rastösen 21 bestehen aus einem von der Kante 36 zwischen rechter Seitenwandung 5 und der Bodenwandung 2 aus schräg nach oben verlaufendem Steg 35 und einer daran angeformten, parallel zur unteren Fläche der Bodenwandung 2 verlaufenden Platte 36. In der Platte 36 ist eine rechteckige Ausnehmung 39 vorgesehen. Die Ausnehmung 39 ist so bemessen, daß der Rasthaken 27 eines zweiten Gehäuses in die Ausnehmung eingeschoben werden kann und die Rastnasen 30 die durch die Ausnehmung 39 gebildeten Stege 39a hintergreifen.

Durch diese komplementär zueinander ausgebildeten Rastelemente kann eine Vielzahl von Gehäusen zu einem Gehäusegurt zusammengesteckt werden. Aufgrund der besonderen Ausbildung der Rastelemente, die im wesentlichen direkt als Verlängerung der Bodenwandung 2 ausgebildet sind, lassen sich diese Rasteinrichtungen auf sehr einfache Weise herstellen. Weiterhin wird eine zuverlässige Verrastung der Gehäuse erreicht, die sicherstellt, daß sich die Gehäuse nicht unbeabsichtigt voneinander lösen können, was zu einem Stillstand der entsprechenden Verarbeitungsmaschine führen würde. Außerdem wird durch die besondere Ausbildung der Rastelemente ein exakter Abstand zwischen den einzelnen Gehäusen definiert, der die maschinelle Einrichtung und Lesung der Codierung im Gurt ermöglicht.

**Ansprüche**

1. Kunststoffgehäuse zur Aufnahme von elektrischen Kontaktelementen, welches zur maschinellen Verarbeitung geeignet ist, dadurch **gekennzeichnet,** daß am Gehäuse (1) Codierungselemente vorgesehen sind, die aus mindestens zwei Nuten (10) und mindestens zwei Stiften (15) bestehen, wobei die Nuten und Stifte raumformmäßig derart aufeinander abgestimmt sind, daß die Stifte spielfrei in den Nuten gelagert werden können, wobei die Stifte in die Nuten ein- und ausschiebbar angeordnet sind.

2. Kunststoffgehäuse nach Anspruch 1, dadurch **gekennzeichnet,** daß die Nuten von der Frontwandung (6) des Gehäuses ausgehen und sich ins Innere des Gehäuses erstrecken.

3. Kunststoffgehäuse nach Anspruch 1 und/oder 2, dadurch **gekennzeichnet,** daß sich die Nuten (10) in die Bodenwandung (2) erstrecken.

4. Kunststoffgehäuse nach einem oder mehreren der Ansprüche 1 bis 3, dadurch **gekennzeichnet,** daß jede Nut (10) eine Öffnung in der Bodenwandung (2) bildet.

5. Kunststoffgehäuse nach einem oder mehreren der Ansprüche 1 bis 4, dadurch **gekennzeich-**

net, daß die Nuten gleich ausgebildet sind.

6. Kunststoffgehäuse nach einem oder mehreren der Ansprüche 1 bis 5, dadurch **gekennzeichnet,** daß jede Nut (10) im Querschnitt T-förmig ausgebildet ist.

7. Kunststoffgehäuse nach Anspruch 6, dadurch **gekennzeichnet,** daß jede Nut (10) aus einem im Querschnitt rechteckigen, zur Deckenwandung bzw. Bodenwandung offenen schmalen T-Steg (11) und aus ebenfalls rechteckigen, jedoch breiteren T-Balkensteg (12) besteht.

8. Kunststoffgehäuse nach Anspruch 7, dadurch **gekennzeichnet,** daß die Stifte (15) im Querschnitt T-förmig ausgebildet sind und den rechteckigen Steg (16) sowie das rechteckige Querstück (17) aufweisen.

9. Kunststoffgehäuse nach einem oder mehreren der Ansprüche 1 bis 8, dadurch **gekennzeichnet,** daß die Stifte (15) aus Metall bestehen.

10. Kunststoffgehäuse nach einem oder mehreren der Ansprüche 1 bis 9, dadurch **gekennzeichnet,** daß die Stifte (15) und die Nuten (10) ein Steckgesicht bilden.

11. Kunststoffgehäuse nach einem oder mehreren der Ansprüche 1 bis 10, dadurch **gekennzeichnet,** daß in alle Nuten (10) Stifte (15) eingeschoben sind.

12. Kunststoffgehäuse nach einem oder mehreren der Ansprüche 1 bis 10, dadurch **gekennzeichnet,** daß alle Nuten frei sind.

13. Kunststoffgehäuse nach einem oder mehreren der Ansprüche 1 bis 10, dadurch **gekennzeichnet,** daß mindestens eine Nut mit einem Stift ausgerüstet ist, und mindestens eine Nut stiftfrei ist.

14. Kunststoffgehäuse nach einem oder mehreren der Ansprüche 1 bis 13, dadurch **gekennzeichnet,** daß mehrere dieser Gehäuse (1) zu einem Gurtband verbindbar sind, wobei diese Verbindung durch Rasteinrichtungen (20, 21) bewirkt wird, wobei auf einer ersten Seite des Gehäuses erste Rasteinrichtungen (20) angeordnet sind, die komplementär zu zweiten Rasteinrichtungen (21) ausgebildet sind, die auf einer zweiten Seite des Gehäuses, die der ersten Seite gegenüberliegt, angeordnet sind.

15. Kunststoffgehäuse nach einem oder mehreren der Ansprüche 1 bis 14, dadurch **gekennzeichnet,** daß die ersten Rasteinrichtungen einen Rastfinger aufweisen.

16. Kunststoffgehäuse nach einem oder mehreren der Ansprüche 1 bis 15, dadurch **gekennzeichnet,** daß der Rastfinger (2, 3) einen Materialsteg (6) aufweist, der im wesentlichen in einer Ebene mit einer Bodenplatte (20) des Gehäuses ausgebildet ist, und daß die Rastnase (2, 3) sich im wesentlichen von diesem Materialsteg (6) aus senkrecht nach oben erstreckt.

17. Kunststoffgehäuse nach einem oder mehreren der Ansprüche 1 bis 16, dadurch **gekennzeichnet,** daß die zweiten Rasteinrichtungen einen bügelförmigen Teil aufweisen, in deren Öffnung die Rastnase der ersten Rasteinrichtungen (10, 11) eingreifen kann.

18. Kunststoffgehäuse nach Anspruch 17, dadurch **gekennzeichnet,** daß die zweiten Rasteinrichtungen erste Materialstege (12) aufweisen, welche in einem nach oben gerichteten Winkel von der Bodenplatte (20) weggebogen sind und daß sich daran das bügelförmige Teil (13) anschließt, welches parallel zur Bodenplatte (20) angeordnet ist.

**FIG.1**

FIG. 2

FIG. 3

| | | |
|---|---|---|
| **Europäisches Patentamt** | **EUROPÄISCHER RECHERCHENBERICHT** | Nummer der Anmeldung<br><br>EP 89 12 0089 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2603747 (FRANZ KIRSTEN ELEKTROTECHNISCHE SPEZIALFABRIK)<br>* Seite 4, Zeile 17 - Seite 6, Zeile 34; Figuren 1-4, 8, 9 *<br>--- | 1, 3-5, 13 | H01R43/20<br>H01R13/645<br>G05B19/12 |
| A | DE-U-8608424 (SIEMENS AG)<br>* Seite 4, Zeile 10 - Seite 6, Zeile 8; Figuren 1-5 *<br>--- | 1 | |
| P,A | DE-A-3744733 (FESTO KG)<br>* Zusammenfassung; Figur 1 *<br>--- | 1 | |
| A | DE-A-3231085 (SIEMENS AG)<br>* Zusammenfassung; Figur 1 *<br>----- | 1 | |

**RECHERCHIERTE SACHGEBIETE (Int. Cl.5)**

H01R
H02B
H01H

Der vorliegende Recherchenbericht wurde für alle Patentansprüche erstellt

| Recherchenort | Abschlußdatum der Recherche | Prüfer |
|---|---|---|
| DEN HAAG | 06 FEBRUAR 1990 | WOODALL C.G. |